# EUROPEAN PATENT APPLICATION

(11) **EP 3 202 251 A1**
(43) Date of publication of application: **09.08.2017**
(21) Application number: 16020234.7
(22) Date of filing: 16.06.2016
(51) Int. Cl.: A01G 9/24

(54) **INSULATED GREENHOUSE WITH CLIMATE INSTALLATION, AND METHOD TO CONTROL THE INTERNAL CLIMATE**

(30) Priority: 16.06.2015 NL 1041365
(71) Applicant: BBBLS BV, 3723 DM Bilthoven (NL); Uniwersytetu Przyrodniczego w Poznaniu, 60-637 Poznan (PL)
(72) Inventor: Bialek, Robert Jarzy, 3090 Hof (NO); Krzesinski, Wlodzimierz Zygmunt, 60-431 Poznan (PL); Paardekooper, Anton Karel, 3723 DM Bilthoven (NL)

(57) **Abstract**

A medium is cooled down at night or in colder seasons and stored in a buffer (9). The cold medium is transported to heat exchangers (1) in the inside of the structure, to dehumidify and to cool down the inside of the structure. Solar heat is collected inside the structure and transported by the medium and stored in a separate heat buffer (3). This heat is used to heat the inside of the structure at colder periods or times of the day. The structure has transparent walls and roofs where insulation can be changed on demand. The structure, or parts of the structure, comprise of a cavity between transparent members. This cavity can be filled with degradable soap to improve insulation and/or shading.

## Description

### Field of the invention

The present invention relates to greenhouses and transparent structures with insulation and a system to control the climate inside the structure.

### Description of prior art

Transparent building structures having cavities between light transmitting roof or wall membranes, which are filled with degradable foam are known. When it is desired the cavities can be filled with foam to improve insulation or provide shading. The foam can be removed when it is desired to let light through. Examples can be found in (US Patent 4,562,674 and PCT patent WO2005085541).

Climate control systems to store and retrieve heat with a buffer are known. When the inside temperature in the transparent structure becomes too high, energy is removed with a medium pumped through heat exchangers and stored in a buffer. This energy is reused by pumping the heated medium back to the heat exchangers when inside temperatures in the structure are decreasing at night and in the colder seasons. (a.o. Dutch Patent: NL C 1010134).

To control humidity it is common practice to ventilate by opening windows in the roof of the transparent structure or by using forced ventilation through fans and ducts. It is even common practice to heat the air inside the structure to increase humidity absorption and consecutively ventilate the humid and warm air outside the structure. The disadvantage of these ways-of-working is the loss of water and CO₂ through ventilation and a high-energy consumption. The CO₂ is one of the nutrients for the plants and in most cases generated by burning fossil fuel and lost through ventilation. NL C 1010134 tries to reduce this negative effect, by forcing the air from the inside of the structure through a duct over a heat exchanger, which is cooled by water from a cold water buffer or aquifer. This buffer or aquifer is connected to the warm water aquifer with a heat exchanger.

The system as described in NL C 1010134 has a limitation when solar radiation is high over a longer period, or when additional growing lights are used. Heat will have to be removed from the inside of the structure over a longer period. As a consequence the temperature of the heat and/or cold buffer will continue to rise. For cooling and dehumidifying this causes a problem, since energy exchange is dependent on the temperature between the inside of the structure and the temperature of the medium in the buffer. In the case where heat needs to be removed from the inside and a rising buffer temperature, the cooling capacity of the buffer will decrease in time. Therefore the method as described in NL C 1010134 and others will only work for a limited time. The described method of cooling the air from the inside of the structure with additional cooling towers or air coolers will help to reduce the inside temperature, but this method will not help to remove humidity because temperature difference between the air at the outside of the structure and the air at the inside of the structure will not be enough to remove humidity.

### Description of the invention.

It is an aim of the present invention to solve these problems and reduce energy consumption. To that end, the present invention provides a new system to control the climate of the inside of a structure, uses a separate cold buffer in order to expand the heat exchange capacity.

In particular the invention relates to a system to control climate in a transparent structure comprising a buffer with a medium that is used to store and re-use temperature influencing energy. Specifically the system according to the invention uses separate buffers to store heating and cooling medium. As indicated in the above the system and method according to the prior art suffers from the disadvantage of a decrease of cooling capacity over time. The present invention overcomes this disadvantage is by using separate buffers for cooling and heating, which can be steered such that optimal climate conditions are achieved in the structure. Next to optimal climate control, effective de-humidification on the inside of the transparent structure can be achieved as will be explained in detail in the description of the figures.

In the context of this invention transparent structure is meant to be a transparent structure used for the purpose of providing shielding and isolation to locations for growing food. The transparent structure can be used in or as a greenhouse or part thereof, for example a roof for a city-farming location. As indicated in the above one of the problems using transparent structures is an efficient climate control and de-humidification. The present invention provides for a climate control system that provides a solution for both.

In order to optimise energy efficiency and to make optimal use of natural resources without the need of unnecessary forced heating or cooling, the environmental temperature is used in order to keep the cooling medium at its optimal temperature for the purpose of cooling. Heat or cold can be removed and transported out of the structure by means of use of heat exchangers connected to the heating or cooling buffer.
In case needed external heating can be added via a heat exchanger that is mounted in the climate control system. Next to the fact that the system can be used to ensure appropriate cooling of the structure, the system comprises a heat buffer that can be fed to the heat exchangers in order to heat the inside of the structure. The system according to the invention is of particular useful in combination with a transparent structure comprising cavities that can be filled with a soap liquid in order to decrease the transparency of the transparent structure for the purpose of isolation. By using the system according to the present invention the temperature of the soap liquid or bubbles can be influenced according to the need and requirements. By doing so, and for example by heating the soap liquid or bubbles with the climate control system according to the present invention, the external face of the transparent system can be kept snow and ice free during cold days. The other way around the soap liquid or bubbles can be used to feed away eat and feed it into the system according to the present invention for re-use at the appropriate moment in time.

The preferred execution is described as follows, in conjunction with the attached figures, where:

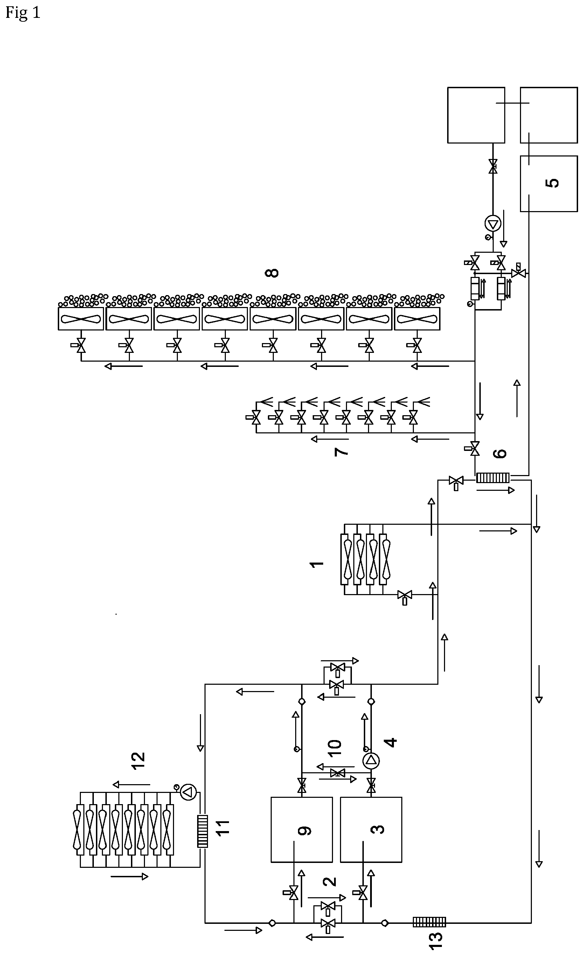

Figure 1 shows the schematic design and layout of the climate control system,

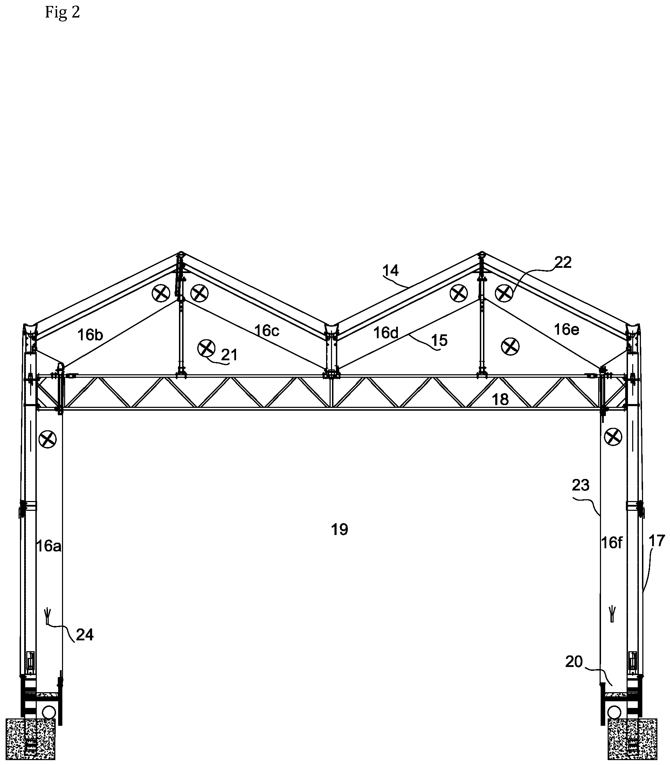

Figure 2 shows the transparent structure and the main elements, and

The control system is not shown in the figures.

Heat exchangers (1) are mounted at the inside of the structure; these heat exchangers are connected via a set of valves (2 and 10) to a warm buffer tank (3) and a pump (4). To cool the inside of the structure the air from the inside of the structure is blown over the heat exchangers and heat is transferred to the medium, the medium is circulated back to the warm buffer tank (3) and the heat is stored.

To heat the inside of the structure at cooler periods the warm medium in the buffer tank (3) is pumped through the heat exchangers (1) and heat is transferred to the air in the inside of the structure (19). External heat can be provided over a heat exchanger (13) to ensure sufficient heating energy.

The same heat from the warm buffer can be used to warm soap liquid in tank (5) with heat exchanger (6). This warm soap liquid can be used to defrost the roof members of the structure (14 and 17) by means of sprayers (7) and bubble generators (8). The soap liquid is recycled back into the soap liquid tank.

A cold buffer tank (9) is connected with the heat exchangers (1) over a valve system (2 and 10) and a pump (4). To cool the greenhouse and to de-humidify, cold water is pumped to the heat exchangers and air from the inside of the structure will be ventilated over the heat exchangers, humidity in the air will condensate on the heat exchanger surface and this condensate can be collected with a pipe and used for irrigation or guided to a drain. Furthermore the cold tank can be connected to the heat exchanger (6) to cool the soap liquid in tank (5).

The temperature of the cold buffer tank (9) is controlled with air coolers (11 and 12), when outside temperature is low the medium in the cold buffer is cooled down. Hereby the availability of a buffer with cold medium is ensured at all times.

The medium can be pumped through the air coolers (11 and 12) and guided directly to the heat exchangers (1) to cool the air in the inside of the structure, in this scenario the cold buffer (9) is by-passed. The cooling capacity of the cold buffer is saved and the total cooling capacity is increased, ensuring availability of the cold buffer at all times. With the controlled cold buffer the medium can be used to de-humidify the inside of the structure at all times.

The temperature of the soap tank (5) is controlled in a similar way. The medium can be pumped from the warm buffer to heat the soap. To cool the soap tank the medium can be pumped from the cold buffer but the medium can also be cooled over the air-coolers to cool the soap tank.

The climate of the inside of the structure can be cooled with the soap bubbles in the cavities (16a through 16f). Because the temperature in the cavity can be relatively high, the temperature difference between the inside of the structure and the soap is high, allowing for efficient heat transfer. To transfer heat the cavity is continuously filled with soap by the bubble generators (22) end heat is transferred to the soap and the soap is collected in the gutter (20) and returned to the soap tank.

Next to the heat exchangers (1) the climate in the greenhouse can be controlled with ventilators or windows in the top of the end walls of the greenhouse (fig. 21). Air is ventilated when the windows are opened or when the ventilators are running. With this method CO₂ and energy are lost.

The transparent structure comprises outer foil members (14 and 17) made of light transmitting foil and stretched over the outside of the construction (18). These members form different cavities with the inner foil members (15 and 23). Each cavity is provided with a bubble generator (22) and is connected to a gutter system (20).

Depending on solar radiation, outside temperature, and inside temperature the cavities are filled with soap bubbles. When insulation is required the cavity is filled, when light transmission is required the soap is removed with sprayers (24) mounted in each cavity.

The inside of the structure (19) is available for the growing systems and growing lamps, giving a maximum usable volume for the crops. There are no curtains blocking light transmission and without curtains there is free space above the crops for ventilation and for the mounting of growing systems.

Because the transparent structure has a switchable high insulation the required heating capacity and temperatures are relatively low, giving low energy losses and allowing for cheap components to be used. Because energy is stored via a medium both in a cold and in a warm buffer tank, the climate can be controlled with a low need for external energy. Because external heat exchangers are used to control the temperature of the cold buffer and are used to cool the greenhouse, the availability of the cold buffer to dehumidify the inside of the structure is guaranteed.

The embodiments of the invention described above are intended to be exemplary. Those skilled in the art will therefore appreciate that the forgoing description is illustrative only, and that various alternatives and modifications can be devised without departing from the present invention. Amongst others heat exchangers, pumps and buffers can be designed differently. Solar heat, growing lights, gas- or electrical boilers, and or combined heat power plants can provide heat. Automation and control of all elements can be done with an integrated computer, the computer can be linked to other climate control systems or the individual elements can be controlled individually. Accordingly, the present invention is intended to embrace all such alternatives, modifications and variances, which fall within the scope of the claims.

## Claims

1. A system for the control of the internal climate of a transparent structure, comprising an energy-carrying medium to store and reuse energy.

2. A system according to claim 1, further comprising separate storage buffers for cold and heat.

3. A system according to claims 1 and 2, further comprising the means to exchange energy with the environment in order to maintain the temperature of the cold storage.

4. A system according to claims 1 and 2, further comprising means to supply external heat via a heat exchanger.

5. A system according to claims 1, 2 and 3, further comprising means to supply stored heat for the heating of the inside of the structure.

6. A system according to claims 1, 2 and 3, further comprisingmeans to transport the heat collected by heat exchangers on the inside of the structure to the cold or warm buffers.

7. A system according to claims 1, 2 and 3, further comprising means to control the insulation factor of the transparent structure by a soap bubble mass that can be inserted as required between the inner- and outer surface of the structure.

8. A system according to claim 7 comprising means to collect and store the soap and the soap bubbles.

9. A system according to claims 7 and 8 comprising means to use the soap to keep the outer surface free from snow.

10. A system according to claims 7 and 8 comprising in which the soap bubbles are used to transport heat.

11. A transparent structure, comprising all or part of of a transparent structure and a connected climate control installation.

12. A transparent structure, according to claim 11, where at least one cavity has been created between inner- and outer-surface.

13. A transparent structure, according to claims 11 and 12, where a soap bubble generator has been mounted in the cavity

14. A transparent structure, according to claims 11 and 13, where the soap bubbles are collected in a gutter system.

15. A transparent structure, according to claims 11 and 13, where the soap and soap bubbles are stored in a tank.

16. A transparent structure, according to claim 11, where several buffer tanks are placed outside the structure.

17. A transparent structure, according to claim 11, where at least on heat exchanger is placed on the inside of the structure.

18. A transparent structure, according to claim 11, where at least one heat exchanger is placed on the outside of the structure.

19. A transparent structure, according to claims 11 and 12, where sprinkler heads are placed in the cavity.

20. A transparent structure, according to claims 16, 17 and 18, where the buffer tanks and heat exchangers are connected by means of pipes.

21. A climate control system according to claim 20, where valves and pumps are included in the pipes.

22. A climate control system according to claims 20 and 21, where the heat exchanger(s) on the inside of the structure can be connected to one or more buffer tanks.

23. A climate control system according to claims 11, 20, 21 and 22, where the heat exchangers on the inside of the structure can be connected to a heat exchanger on the outside of the structure.

24. A climate control system according to claims 12, 13, 15 and 20, where the soap tank can be connected to the buffer tanks and the heat exchanger on the outside.

25. A climate control system according to claims 11 and 20, where an external heat source can be connected to the pipes by means of an heat exchanger.
